# EUROPÄISCHE PATENTSCHRIFT

(11) **EP 2 418 248 B1**
(45) Veröffentlichungstag und Bekanntmachung des Hinweises auf die Patenterteilung: **08.10.2014**
(21) Anmeldenummer: 11175621.9
(22) Anmeldetag: 27.07.2011
(51) Int. Cl.: C08L 67/02, C08L 67/04, C08K 5/29

(54) **Langlebige biobasierte kunststoffe, ein verfahren zu deren herstellung und deren verwendung**
Long-life bio-based plastics, method for producing same and usage thereof
Matières synthétiques bio à longue durée de vie, leur procédé de fabrication et d'utilisation

(30) Priorität: 11.08.2010 EP 10172531
(43) Veröffentlichungstag der Anmeldung: 15.02.2012
(73) Patentinhaber: Rhein Chemie Rheinau GmbH, 68219 Mannheim (DE)
(72) Erfinder: Fruth, Andrea, 65189 Wiesbaden (DE); Cano Sierra, Ana Maria, 69117 Heidelberg (DE); Krug, Andreas, 68309 Mannheim (DE); Scheffner, Christian, 69207 Sandhausen (DE)
(74) Vertreter: Siegers, Britta

(56) Entgegenhaltungen:
- EP-A2- 0 417 717
- US-A1- 2007 066 727
- US-A1- 2009 318 628
- US-A1- 2010 197 842

## Beschreibung

Gegenstand der vorliegenden Erfindung sind neuartige langlebige und hydrolysestabile biobasierte Kunststoffe auf Basis von Polyesterharzen, ein Verfahren zu deren Herstellung und deren Verwendung.

Biobasierte Kunststoffe, sogenannte Biopolymere, sind im Vergleich zu petrochemisch basierten Kunststoffen aufgrund der eingesetzten biobasierten Rohstoffe ökologisch nachhaltigere Werkstoffe. Insbesondere im Hinblick auf den Umweltschutz und die drohende Klimaerwärmung haben biobasierte Kunststoffe eine zunehmend Bedeutung nicht nur im Bereich Verpackung, sondern auch bei der Herstellung langlebiger sowie technischer Kunststoffprodukte erlangt. Um jedoch biobasierte Werkstoffe im Vergleich zu herkömmlichen und etablierten Werkstoffen konkurrenzfähig zu machen, sind vielfach noch Optimierungen in der Werkstoffherstellung und -verarbeitung notwendig.

Biobasierte Kunststoffe bestehen beispielsweise aus aliphatischem Polyesterharz, welches durch Polymerisation fermentativ gewonnener Monomere aus Stärke, Zucker, Kohlenhydraten, Pflanzenöl oder Fetten hergestellt wird. Ebenso handelt es sich bei biobasierten Kunststoffen um aliphatisch-aromatische Polyester, welche auf einer biogen hergestellten Diolkomponente basieren, sowie um Biopolyamide, bei denen die Säurekompontente aus natürlich vorkommenden Stoffen gewonnen wird.

Biobasierten Kunststoffe haben den großen Vorteil, dass sie sehr umweltfreundlich sind. Nachteiligerweise sind diese jedoch sehr hydrolyseempfindlich.

Es wurde versucht, über den Zusatz verschiedenster Additive dieses Problem zu lösen. So werden beispielsweise in EP-A 0 890 604 sowie EP-A 1 277 792 Carbodiimidverbindungen zur Stabilisierung von biologisch abbaubaren Kunststoffzusammensetzungen eingesetzt. Bei den dort beschriebenen Carbodiimiden handelt es sich um aliphatische und aromatische monomere und oligomere Carbodiimide, die aber nur zu einem geringen Anstieg der Lebensdauer führen.

Die in EP-A 1354917 zusätzlich eingesetzten Antioxidantien reduzieren zwar die Gelbfärbung, erhöhen aber nicht die Stabilität. Gleiches gilt für die EP-A 1 876 205 bei der eine Biopolymerzusammensetzung aus einem biologisch abbaubaren Polyester mit einem Carbodiimid, einer Phosphitverbindung und einer Silikatverbindung eingesetzt wird.

Aus EP-A 1627894 ist die Herstellung einer Folie aus aliphatischen Polyesterharzen, bevorzugt Polymilchsäure, bekannt, wobei eine Vielzahl von Carbodiimiden zur Stabilisierung erwähnt wird. Das Kriterium der Langzeitstabilität wird jedoch hier nur bedingt erfüllt.

Weiterhin ist bekannt bis zu 1% einer Kombination aus Stabaxol® I und Carbodilite® LA-1 im Verhältnis 1:1 bis 1:2 einzusetzen, siehe Abstract von US 2010/197842 und US 20090318628 A1. Auch hier wird kein befriedigendes Ergebnis in Bezug auf die Hydrolysestabilität und die Verarbeitbarkeit erreicht.

Es bestand daher die Aufgabe, neuartige langlebige biobasierte Kunststoffe bereitzustellen, welche die Nachteile des Standes der Technik nicht aufweisen und über eine hohe Hydrolysestabilität, eine gute Verarbeitbarkeit und über eine geringe Gelbfärbung verfügen.

Überraschenderweise wurde nun gefunden, dass die erfindungsgemäßen biobasierten Kunststoffe, enthaltend eine Kombination aus mindestens einem aliphatischen Polyesterharz und mindestens einer definierten Mischung aus mindestens einem aromatischen monomeren Carbodiimid und mindestens einem aromatischen oligomeren und/oder aromatischen polymeren Carbodiimid, diese Aufgabe erfüllen.

Gegenstand der vorliegenden Erfindung sind daher biobasierte Kunststoffe, enthaltend eine Kombination aus mindestens einem aliphatischen Polyesterharz, und, bezogen auf den biobasierten Kunststoff, einer Mischung aus mindestens einem aromatischen monomeren Carbodiimid und mindestens einem aromatischen oligomeren und/oder aromatischen polymeren Carbodiimid, wobei das Verhältnis von aromatisch monomerem zu aromatischen polymeren und/oder aromatisch oligomeren Carbodiimid >1:1 1 beträgt. Dabei ist es bevorzugt, dass der Anteil dieser Mischung aus Carbodiimiden mindestens 1 Gew.-%, bevorzugt mehr als 1,1 Gew.-%, ganz besonders bevorzugt ≥ 1,2 %, bezogen auf den biobasierten Kunststoff, beträgt.

Bei den biobasierten Kunststoffen im Sinne der Erfindung handelt es sich um aliphatische Polyesterharze, welche durch Polymerisation fermentativ gewonnener Monomere aus Stärke, Zucker, Kohlenhydraten, Pflanzenöl oder Fetten hergestellt sind.

Die Polyesterharze zur Herstellung der biobasierten Kunststoffe sind kommerziell erhältlich, können aber auch nach den, dem Fachmann geläufigen Verfahren, wie z.B. über Ringöffnungspolymerisation von Lactiden, hergestellt werden.

Erfindungsgemäß handelt es sich bei den biobasierten Kunststoffen um Polymere aus der Gruppe der aliphatischen Polyesterharze. Zur Gruppe der aliphatischen Polyesterharze zählt vor allem Polymilchsäure (PLA).

Bei den Polyesterharzen im Sinne der Erfindung handelt es sich vorzugsweise um aliphatische Polyesterharze, welche durch Polymerisation fermentativ gewonnener Monomere aus Stärke, Zucker, Kohlenhydraten, Pflanzenöl oder Fetten hergestellt werden.

Die als aliphatisches Polyesterharz besonders bevorzugte Polymilchsäure ist kommerziell verfügbar, z.B. bei der Firma NatureWorks oder kann nach den, dem Fachmann geläufigen Verfahren, wie z.B. durch Ringöffnungspolymerisation von Lactiden, hergestellt werden. Die Herstellung von Polymilchsäure durch Ringöffnungspolymerisation von Lactiden ist dabei auf keines der beiden Enantiomere, L-Milchsäure oder D-Milchsäure oder Mischungen daraus, beschränkt. Auch andere Formen der Herstellung für Polymilchsäure werden an dieser Stelle nicht ausgeschlossen. Im Sinne der Erfindung sind dabei die Polymere aus L-Milchsäure und/oder D-Milchsäure als aliphatisches Polyesterharz einsetzbar.

Als aromatisch monomere, aromatisch oligomere und/oder aromatisch polymere Carbodiimide sind alle bekannten Carbodiimide einsetzbar.

In einer bevorzugten Ausführungsform der vorliegenden Erfindung ist mindestens eines der eingesetzten Carbodiimide sterisch gehindert.

Bei dem aromatischen monomeren Carbodiimid handelt es sich vorzugsweise um eine Verbindung der Formel (I)

R'-N=C=N-R" (I),

in der
und R' und R" gleich oder verschieden sind und Aryl, C₇ -C₁₈-Aralkyl entsprechen,

R' und R" im Fall eines aromatischen Restes keine oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen, die auch Heteroatome, wie z.B. O, N und/oder S tragen können.

Besonders bevorzugt handelt es sich bei dem aromatischen monomeren Carbodiimid um ein sterisch gehindertes, aromatisches Carbodiimid der allgemeinen Formel (II), 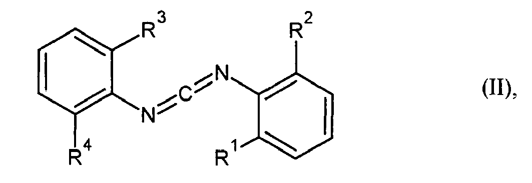 in der R¹ bis R⁴ unabhängig voneinander H, C₁- bis C₂₀-Alkyl, bevorzugt verzweigtes C₃- bis C₂₀-Alkyl, C₃- bis C₂₀-Cycloalkyl, C₆- bis C₁₅-Aryl oder einen C₆- bis C₁₅-Aralkylrest bedeutet, der gegebenenfalls auch Heteroatome, wie z.B. O, N und/oder S enthalten kann.

Des Weiteren bevorzugt handelt es sich bei den Resten R¹ bis R⁴ um Wasserstoff und/oder Diisopropylreste.

Bei den aromatischen polymeren oder oligomeren Carbodiimiden handelt es sich vorzugsweise um Verbindungen der allgemeinen Formel (III),

R⁵-(-N=C=N-R'''-)ₘ-R⁶ (III),

in der
R''' einen aromatischen und/oder araliphatischen Rest bedeutet,
R''' innerhalb des Moleküls gleich oder verschieden ist und bei verschiedenen Kombinationen jeder der vorgenannten Reste beliebig miteinander kombiniert werden kann,
R''' keine oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen kann, die auch Heteroatome tragen können,
R⁵ = C₁ - C₁₈-Alkyl, C₅ - C₁₈-Cycloalkyl, Aryl, C₇ - C₁₈-Aralkyl, -R'''-NH-COS-R⁷, -R'''-COOR⁷, -R'''-OR⁷, -R'''-N(R⁷)₂, -R'''-SR⁷, -R'''-OH, R'''-NH₂, -R'''-NHR⁷, -R'''-Epoxy, -R'''-NCO, -R'''-NHCONHR⁷, -R'''-NHCONR⁷R⁸ oder -R'''-NHCOOR⁹ und
R⁶ = -N=C=N-Aryl, -N=C=N-Alkyl, -N=C=N-Cycloalkyl, -N=C=N-Aralkyl, -NCO, -NHCONHR⁷, - NHCONHR⁷R⁸, -NHCOOR⁹, -NHCOS-R⁷, -COOR⁷, -OR⁷, -N(R⁷)₂, -SR⁷, -Epoxy, -OH, -NH₂, -NHR⁷,
wobei in R⁵ und R⁶ unabhängig voneinander R⁷ und R⁸ gleich oder verschieden sind und einen C₁-C₂₀-Alkyl-, C₃ - C₂₀-Cycloalkyl, C₇ - C₁₈-Aralkylrest, Oligo-/Polyethylen- und/oder -Propylenglykole darstellen und R⁹ eine der Bedeutungen von R⁷ hat oder einen Polyester- oder einen Polyamidrest bedeutet, und wobei
bei oligomeren aromatischen Carbodiimiden m einer ganzen Zahl von 1 bis 5 entspricht, und
bei polymeren aromatischen Carbodiimiden m einer ganzen Zahl von > 5, bevorzugt 6 - 50 entspricht.

Besonders bevorzugt ist R⁵ = Diisopropylphenyl und/oder Diisopropylphenylisocyanat und/oder -R'''-NHCOOR⁷ und/oder Cyclohexyl. Besonders bevorzugt für R⁶ sind -NCO und/oder -N=C=N-Diisopropylphenyl und/oder -N=C=N-Cyclohexyl und/oder -NHCOOR⁷.

Bei dem aromatischen polymeren oder oligomeren Carbodiimid kann es sich aber auch um Verbindungen der Formel (III) handeln, bei denen R'''=1,3-substituiertes-2,4,6-Triisopropylphenyl und/oder ein Tetramethylxylylenderivat und/oder 2,4-substituiertes Tolylen, 2,6-substituiertes Tolylen und/oder Gemischen aus 2,4- oder 2,6-substituiertem Tolylen.

In einer weiteren Ausführungsform der vorliegenden Erfindung ist es auch möglich, eine Mischung verschiedener polymerer und/oder einer Mischung aus oligomeren und polymeren Carbodiimiden einzusetzen.

Bei den vorgenannten aromatischen monomeren und auch den aromatisch oligomere/polymeren Carbodiimiden handelt es sich bei den Verbindungen der Formeln (II) und (III) um handelsübliche Verbindungen, die z.B. bei der Rhein Chemie Rheinau GmbH erhältlich sind.

Ebenso möglich ist auch die Herstellung der Carbodiimide nach den beispielsweise in Angewandte Chemie 74 (21), 1962, S. 801 - 806 beschriebenen Verfahren oder durch die Kondensation von Diisocyanaten unter Abspaltung von Kohlendioxid bei erhöhten Temperaturen, z.B. bei 40 °C bis 200 °C, in Gegenwart von Katalysatoren. Geeignete Verfahren werden in DE-A-11 30 594 und in DE-B-11 56 401 beschrieben. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Zur Herstellung der eingesetzten Carbodiimide und/oder Polycarbodiimide eignen sich alle Isocyanate, wobei im Rahmen der vorliegenden Erfindung bevorzugt Carbodiimide und/oder Polycarbodiimide verwendet werden, die auf durch C₁- bis C₄-Alkyl substituierten aromatischen Isocyanaten aufbauen, wie z.B. 2,6-Diisopropylphenylisocyanat, 2,4,6-Triisopropylphenyl-1,3-diisocyanat, 2,4,6-Triethylphenyl-l,3-diisocyanat, 2,4,6-Trimethyl-phenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanatodiphenylmethan, Tetramethylxyloldiisocyanat, 1,5-Naphthalindiisocyanat, 4,4'-Diphenylmethandiisocyanat, 4,4'-Diphenyldimethyl-methan-diisocyanat, 1,3-Phenylendiisocyanat, 1,4-Phenylendiisocyanat, 2,4-Tolylendiisocyanat, 2,6-Tolylendiisocyanat, ein Gemisch aus 2,4-Tolylendiisocyanat und 2,6-Tolylendiisocyanat, Hexamethylendiisocyanat, Cyclohexan-1,4-diisocyanat, Xylylendiisocyanat, Isophorondiisocyanat, Dicyclohexylmethan-4,4'-di-isocyanat, Methylcyclohexandiisocyanat, Tetramethylxylylen-diisocyanat, 2,6-Diisopropylphenylen-isocyanat und 1,3,5-Triisopropylbenzol-2,4-diisocyanat oder deren Gemische, oder auf substituierten Aralkylen, wie 1,3-Bis-(1-methyl-1-isocyanato-ethyl)-benzol, basieren. Besonders bevorzugt ist es, wenn die Carbodiimide und/oder Polycarbodiimide auf 2,4,6-Triisopropylphenyl-1,3-diisocyanat und/oder 2,6-Diisopropylphenylenisocyanat und/oder Tetramethylxylylendiisocyanat und/oder 2,4-Tolylendiisocyanat und/oder 2,6-Tolylendiisocyanat und/ oder Gemischen aus 2,4- und 2,6-Tolylendiisocyanat basieren.

>

Vorzugsweise beträgt der Anteil an sterisch gehinderten Carbodiimid und dem oligomeren/polymeren Carbodiimid in dem Polyesterharz 1 - 5%.

Des Weiteren ist bevorzugt, dass der Anteil an Polyesterharz in dem biobasierten Kunststoff 5-99,5%, besonders bevorzugt 50-99,0% beträgt.

In einer weiteren bevorzugten Ausführungsform der Erfindung beträgt das Verhältnis von aromatischem monomeren Carbodiimid zu dem aromatischen oligomeren und/oder aromatischen polymeren Carbodiimid >1,5:1.

Gegenstand der vorliegenden Erfindung ist zudem ein Verfahren zur Herstellung der biobasierten Kunststoffe, wonach mindestens ein Polyesterharz mit mindestens einem aromatischen monomeren Carbodiimid und mindestens einem aromatischen oligomeren Carbodiimid und/oder aromatischen polymeren Carbodiimid in einem Mischaggregat vermischt werden, wobei das Verhältnis von aromatisch monomerem zu aromatischen polymeren und/oder aromatisch oligomeren Carbodiimid > 1:1 1 beträgt..

Die Reihenfolge, in der die verschiedenen Carbodiimide eingemischt werden, kann dabei frei gewählt werden. Des Weiteren kann die Zugabe der Carbodiimide auch nach der Herstellung des biobasierten Kunststoffes erfolgen.

Mischaggregate im Sinne der Erfindung sind beispielsweise ein Extruder oder Kneter.

Gegenstand der vorliegenden Erfindung ist zudem die Verwendung der erfindungsgemäßen biobasierten Kunststoffe in langlebigen Anwendungen, wie z.B. Elektronik, Automotive, im Transportwesen (Land, Wasser und Luft), Construction, im Haushalt, z.B. als Badutensilien, oder als Bürobedarf, oder für Anwendungen unter "severe conditions", wie z.B. sterile Bedingungen in der Medizin.

Die nachfolgenden Beispiele dienen der Erläuterung der Erfindung, ohne dabei limitierend zu wirken.

### Ausführungsbeispiele:

### Verwendete Chemikalien:

**CDI I:** ein sterisch gehindertes aromatisches monomeres Carbodiimid (Stabaxol® I) mit einem NCN-Gehalt von mindestens 10,0 %, von der Firma Rhein Chemie Rheinau GmbH.

**CDI II,** ein sterisch gehindertes aromatisches polymeres Carbodiimid (Stabaxol® P) mit einem NCN-Gehalt von 13,5 %, von der Firma Rhein Chemie Rheinau GmbH.

**Carbodilite® LA-1 (H12MDI-PCDI):** ein polymeres aliphatisches Carbodiimid mit einem NCN-Gehalt von 15,8% , von der Firma Nisshinbo Chemical Inc.

**Polymilchsäure** (PLA) der Firma NatureWorks 2002 D.

### Verwendete Geräte

Die Einarbeitung der Carbodiimide in die Polymilchsäure erfolgte mittels eines Labordoppelschneckenextruders ZSK 25 der Firma Werner & Pfleiderer.

Die eingesetzten Mengen an Carbodiimid und die Art des eingesetzten Carbodiimids ergeben sich aus Tabelle 1.

Die F3-Normprüfkörper wurden an einer Spritzgießmaschine des Typs Arburg Allrounder 320 S 150 - 500 erstellt.

Für den Hydrolysetest von Polymilchsäure (PLA) wurden die F3-Normprüfkörper in Wasser bei einer Temperatur von 65°C gelagert und nach verschiedenen Zeiteinheiten wurde eine Zugprüfung durchgeführt, um die Zugfestigkeit zu überprüfen. Die Hydrolyseschutzdauer beschreibt dabei die Lebensdauer der Prüfkörper, nach wie viel Tagen unter Prüfbedingungen die Zugfestigkeit einen Wert kleiner 5 MPa angenommen hat.

Der LAB-Gelbwert wurde an den Polymergranulaten an einem Farbmessgerät der Firma X-Rite mit der Modellbezeichnung Match Rite gemessen.

Die zahlenmittlere Molmassen Mₙ wurden mittels Gel-Permeations-Chromatographie bestimmt. Als Eluent wurde Tetrahydrofuran verwendet. Als Detektor wurde ein Dualdetektor der Firma Viscotec, Modell MP 250, eingesetzt. Als stationäre Phase wurde drei Säulen mit folgender Bezeichnung in Reihe geschalten: 1 x PSS Gel SDV 10⁵ Å, 1 x PL Gel 10⁴ Å, 1 x PL Gel SDV 500 Å. Die Säulen- und Detektortemperatur betrug 40°C. Als Pumpe diente ein Gerät der Firma Thermo Fisher, Modell TSP 100. Die Einspritzung der Proben erfolgte über einen Autosampler von Thermo Fisher, Modell AS 100.

**Tabelle 1: Erfindungsgemäße Proben und deren Testergebnisse:**

| **Probe** | **Eingesetzte Additive** | **Hydrolyseschutzdauer [d]** | **Mₙ [g/mol]** | **LAB-Gelbwert (B)** |
|---|---|---|---|---|
| 1 | 1,0% CDI I + 0,5% CDI II | 35 | 49780 | 8,0 |

**Tabelle 2: Vergleichsbeispiele:**

| **Probe** | **Eingesetzte Additive** | **Hydrolyseschutzdauer [d]** | **Mₙ [g/mol]** | **LAB-Gelbwert (B)** |
|---|---|---|---|---|
| 2 | 0,5% CDI I + 1,0% CDI II | 21 | 45400 | 7,6 |
| 3 | 0,5% CDI I + 0,5% CDI II | 13 | 46800 | 6,8 |
| 4 | PLA 1 x extrudiert (Nullprobe) | 5 | 39400 | 7,2 |
| 5 | 1,5% CDI II | 11 | 59510 | 9,3 |
| 6 | 1,5% H12MDI-PCDI | 18 | 48400 | 11,3 |
| 7 | 0,5% CDI I + 0,5% H12MDI-PCDI | 29 | 46300 | 10,5 |
| 8 | 1,0% CDII + 0,5% H12MDI-PCDI | 38 | 44850 | 10,1 |

Wichtig für die beabsichtigten Anwendungen sind gute Werte sowohl in Bezug auf den Hydrolyseschutz als auch die Verarbeitbarkeit in Verbindung mit einer geringen Gelbfärbung.

Alle erfindungsgemäßen Proben sind hydrolysestabil (mindestens 21 Tage bis zu 35 Tage), haben aufgrund des hohen Molekulargewichts eine gute Verarbeitbarkeit und weisen eine niedrige Gelbfärbung auf ≤ 8.

Bei den Vergleichsbeispielen wiesen die Proben immer nur eine verbesserte Eigenschaft auf, nie sind aber alle drei Eigenschaften gleichzeitig verbessert.

## Patentansprüche

1. Biobasierte Kunststoffe enthaltend eine Kombination aus mindestens einem aliphatischen Polyesterharz und, bezogen auf den biobasierten Kunststoff, einer Mischung aus mindestens einem aromatischen monomere Carbodiimid und mindestens einem aromatischen oligomeren und/oder aromatischen polymeren Carbodiimid, wobei das Verhältnis von aromatisch monomerem zu aromatischen polymeren und/oder aromatisch oligomeren Carbodiimid >1:1 beträgt.

2. Biobasierte Kunststoffe nach Anspruch 1, **dadurch gekennzeichnet, dass** mindestens eines der Carbodiimide sterisch gehindert ist.

3. Biobasierte Kunststoffe nach Anspruch 1 oder 2, dadurch gekenntzeichnet dass der Anteil der Carbodiimide mindestens 1 Gew.-% beträgt.

4. Biobasierte Kunststoffe nach einem oder mehreren der Ansprüche 1 bis 4, **dadurch gekennzeichnet, dass** es sich bei dem aromatischen monomeren Carbodiimid um eine Verbindung der Formel (I)
R'-N=C=N-R" (I)
handelt, in der
R' und R'' gleich oder verschieden sind und Aryl, C₇ - C₁₈-Aralkyl entsprechen,
R' und R" im Fall eines aromatischen Restes keine oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen, die auch Heteroatome tragen können.

5. Biobasierte Kunststoffe nach Anspruch 4, dadurch gekenntzeichnet, dass es sich bei dem aromatischen monomeren Carbodiimid um ein sterisch gehindertes, aromatischer Carbodiimid der allgemeinen Formel (II), 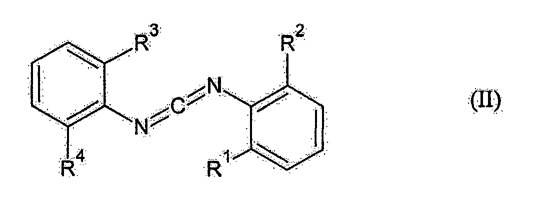 handelt, in der
R¹ bis R⁴ unabhängig voneinander H, C₁- bis C₂₀-Alkyl, C₃- bis C₂₀- Cycloalkyl, C₆- bis C₁₅-Aryl oder einen C₆- bis C₁₅-Aralkylrest bedeutet, der gegebenenfalls auch Heteroatome enthalten kann.

6. Biobasierte Kunststoffe nach einem oder mehreren der Ansprüche 1 bis 5, **dadurch gekennzeichnet, dass** es sich bei dem aromatischen polymeren oder oligomeren Carbodiimid um Verbindungen der allgemeinen Formel (III),
R⁵-(-N=C=N-R"'-)ₘ-R⁶ (III)
handelt, in der
R''' einen aromatischen und/oder araliphatischen Rest bedeutet,
R''' innerhalb des Moleküls gleich oder verschieden ist und bei verschiedenen Kombinationen jeder der vorgenannten Reste beliebig miteinander kombiniert werden kann,
R''' keine oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen kann, die auch Heteroatome tragen können,
R⁵ = C₁ - C₁₈-Alkyl, C₅ - C₁₈-Cycloalkyl, Aryl, C₇ - C₁₈-Aralkyl, -R'''-NH-COS-R⁷, -R'''-COOR⁷, -R'''-OR⁷ -R'''-N(R⁷)₂, -R'''-SR⁷, -R"'-OH, R'"-NH₂, -R"'-NHR⁷, R'''-Epoxy, -R"'-NCO, -R'''-NHCONHR⁷, -R'''-NHCONR⁷R⁸ oder - R'''-NHCOOR⁹ und
R⁶ = -N=C=N-Aryl, -N=C=N-Alkyl, -N=C=N-Cycloalkyl, N=C=N-Aralkyl, -NCO, -NHCONHR⁷, -NHCONHR⁷R⁸, -NHCOOR⁹ -NHCOS-R⁷, -COOR⁷, OR⁷, - Epoxy, -N(R⁷)₂, -SR⁷, -OH, -NH₂, -NHR₇,
wobei in R⁵ und R⁶ unabhängig voneinander R⁷ und R⁸ gleich oder verschieden sind und einen C₁ - C₂₀-Alkyl-, C₃ - C₂₀-Cyeloalkyl, C₇ - C₁₈-Aralkylrest, Oligo-/Polethylen-und/oder -Propylenglykole darstellen und R⁹ eine der Bedeutungen von R⁷ hat oder einen Polyester- oder einen Polyamidrest bedeutet, und bei oligomeren aromatischen Carbodiimide m einer ganzen Zahl von 1 bis 5 entspricht, und bei polymeren aromatischen Carbodiimiden m einer ganzen Zahl von > 5 entspricht.

7. Biobasierte Kunststoffe nach einem oder mehreren der Anspruche 1 bis 6, dadurch gekenntzeichnet, dass es sich bei dem aromatischen polymeren oder oligomeren Carbodiimid um Verbindungen der Formel (III) handelt, bei denen R''' einem 1,3-substituierten-2,4,6-Triisopropylphenyl und/oder einem Tetramethylxylylenderivat und/oder 2,4-substituierten Tolylen und/oder 2,6-substituierten Tolylen und/oder Gemischen aus 2,4- oder 2,6-substituierten Tolylen entspricht.

8. Verfahren zur Herstellung der biobasierten Kunststoffe nach einem oder mehreren der Absprüche 1 bis 7, **dadurch gekennzeichnet, dass** mindestens ein Polyesterharz mit mindestens einem aromatischen monomeren Carbodiimid und mindestens einem aromatischen oligomeren und/oder aromatischen polymeren Carbodiimid in einem Mischaggregat vermischt werden, wobei das Verhältnis von aromatisch monomerem zu aromatischen polymeren und/oder aromatisch oligomeren Carbodiimid >1:1 beträgt.

9. Verwendung der biobasierten Kunststoffe nach einem oder mehreren der Ansprüche 1 bis 7 in langlebigen Anwendungen in der Elektronik, Automotive, im Transportwesen, Construction, im Haushalt, als Bürobedarf oder in Anwendungen unter "severe conditions".

## Claims

1. Bio-based plastics comprising a combination of at least one aliphatic polyester resin and, based on the bio-based plastic, of a mixture of at least one aromatic monomeric carbodiimide and of at least one aromatic oligomeric and/or aromatic polymeric carbodiimide, where the ratio of aromatic monomeric to aromatic polymeric and/or aromatic oligomeric carbodiimide is > 1:1.

2. Bio-based plastics according to Claim 1, **characterized in that** at least one of the carbodiimides is a sterically hindered carbodiimide.

3. Bio-based plastics according to Claim 1 or 2, **characterized in that** the proportion of the carbodiimides is at least 1% by weight.

4. Bio-based plastics according to one or more of Claims 1 to 4, **characterized in that** the aromatic monomeric carbodiimide involves a compound of the formula (I)
R'-N=C=N-R" (I)
in which
R' and R" are identical or different and are aryl or C₇-C₁₈-aralkyl,
in the case of an aromatic moiety, R' and R" can, in at least one ortho-position with respect to the aromatic carbon atom which bears the carbodiimide group, bear aliphatic and/or cycloaliphatic and/or aromatic substituents having at least one carbon atom, where these can also bear heteroatoms, or R' and R" can bear no such substituents.

5. Bio-based plastics according to Claim 4, **characterized in that** the aromatic monomeric carbodiimide involves a sterically hindered, aromatic carbodiimide of the general formula (II) 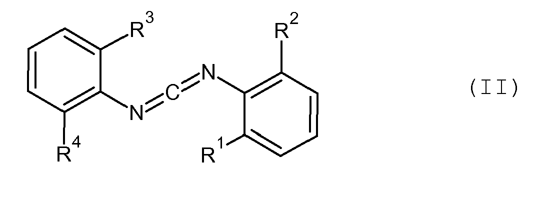 in which
R¹ to R⁴ are mutually independently H, C₁-C₂₀-alkyl, C₃-C₂₀-cycloalkyl, C₆-C₁₅-aryl or a C₆-C₁₅-aralkyl moiety, where this can optionally also comprise heteroatoms.

6. Bio-based plastics according to one or more of Claims 1 to 5, **characterized in that** the aromatic polymeric or oligomeric carbodiimide involves compounds of the general formula (III)
R⁵-(-N=C=N-R"'-)ₘ-R⁶ (III)
in which
R''' is an aromatic and/or araliphatic moiety,
R''' within the molecule is identical or different and in various combinations each of the abovementioned moieties can be combined as desired with one another,
R''' can, in at least one ortho-position with respect to the aromatic carbon atom which bears the carbodiimide group, bear aliphatic and/or cycloaliphatic and/or aromatic substituents having at least one carbon atom, where these can also bear heteroatoms, or R"' can bear no such substituents,
R⁵ = C₁-C₁₈-alkyl, C₅-C₁₈-cycloalkyl, aryl, C₇-C₁₈-aralkyl, -R'"-NH-COS-R⁷, -R'"-COOR⁷, -R'''-OR⁷, -R'''-N(R⁷)₂, -R'''-SR⁷, -R'"-OH, R"'-NH₂, -R"'-NHR⁷, R"'-epoxy, -R"'-NCO, -R'''-NHCONHR⁷, -R"'-NHCONR⁷R⁸ or -R"'-NHCOOR⁹ and
R⁶ = -N=C=N-aryl, -N=C=N-alkyl, -N=C=N-cycloalkyl, -N=C=N-aralkyl, -NCO, -NHCONHR⁷, -NHCONHR⁷R⁸, -NHCOOR⁹, -NHCOS-R⁷, -COOR⁷, -OR⁷, -epoxy, -N(R⁷)₂, -SR⁷, -OH, -NH₂, -NHR⁷,
where, in R⁵ and R⁶, mutually independently, R⁷ and R⁸ are identical or different and are a C₁-C₂₀-alkyl moiety, C₃-C₂₀-CyCloalkyl moiety, C₇-C₁₈-aralkyl moiety, oligo/polyethylene glycols and/or oligo/polypropylene glycols, and R⁹ complies with one of the definitions of R⁷ or is a polyester moiety or a polyamide moiety, and in the case of oligomeric aromatic carbodiimides m is an integer from 1 to 5, and in the case of polymeric aromatic carbodiimides m is an integer > 5.

7. Bio-based plastics according to one or more of Claims 1 to 6, **characterized in that** the aromatic polymeric or oligomeric carbodiimide involves compounds of the formula (III) where R"' is a 1,3-substituted 2,4,6-triisopropylphenyl and/or a tetramethylxylylene derivative and/or 2,4-substituted tolylene and/or 2,6-substituted tolylene and/or a mixture of 2,4- or 2,6-substitituted tolylene.

8. Process for producing the bio-based plastics according to one or more of Claims 1 to 7, **characterized in that** at least one polyester resin is mixed with at least one aromatic monomeric carbodiimide and with at least one aromatic oligomeric and/or aromatic polymeric carbodiimide in a mixing assembly, where the ratio of aromatic monomeric to aromatic polymeric and/or aromatic oligomeric carbodiimide is > 1:1.

9. Use of the bio-based plastics according to one or more of Claims 1 to 7 in long-lived applications in electronics, automotive systems, in the transport industry, in construction, in the domestic sector, or in the form of office requisite or in applications under "severe conditions".

## Revendications

1. Matières synthétiques bio contenant une combinaison d'au moins une résine de polyester aliphatique et, par rapport à la matière synthétique bio, d'un mélange d'au moins un carbodiimide monomère aromatique et d'au moins un carbodiimide oligomère aromatique et/ou polymère aromatique, le rapport entre le carbodiimide monomère aromatique et le carbodiimide polymère aromatique et/ou oligomère aromatique étant > 1:1.

2. Matières synthétiques bio selon la revendication 1, **caractérisées en ce qu'**au moins un des carbodiimides est à encombrement stérique.

3. Matières synthétiques bio selon la revendication 1 ou 2, **caractérisées en ce que** la proportion des carbodiimides est d'au moins 1 % en poids.

4. Matières synthétiques bio selon une ou plusieurs des revendications 1 à 4, **caractérisées en ce que** le carbodiimide monomère aromatique consiste en un composé de formule (I)
R'-N=C=N-R" (I)
dans laquelle
R' et R" sont identiques ou différents, et correspondent à aryle, aralkyle en C₇-C₁₈,
dans le cas d'un radical aromatique, R' et R" ne portent pas de substituants ou portent des substituants aliphatiques et/ou cycloaliphatiques et/ou aromatiques contenant au moins un atome de carbone, qui peuvent également porter des hétéroatomes, au moins en une position ortho par rapport à l'atome de carbone aromatique qui porte le groupe carbodiimide.

5. Matières synthétiques bio selon la revendication 4, **caractérisées en ce que** le carbodiimide monomère aromatique consiste en un carbodiimide aromatique à encombrement stérique de formule générale (II) 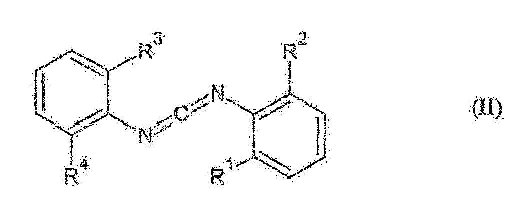 dans laquelle
R¹ à R⁴ signifient indépendamment les uns des autres H, alkyle en C₁ à C₂₀, cycloalkyle en C₃ à C₂₀, aryle en C₆ à C₁₅ ou un radical aralkyle en C₆ à C₁₅, qui peut éventuellement également contenir des hétéroatomes.

6. Matières synthétiques bio selon une ou plusieurs des revendications 1 à 5, **caractérisées en ce que** le carbodiimide aromatique polymère ou oligomère consiste en des composés de formule générale (III)
R⁵- (-N=C=N-R'"-)ₘ-R⁶ (III)
dans laquelle
les R"' signifient un radical aromatique et/ou araliphatique,
les R"' sont identiques ou différents dans la molécule, et peuvent être combinés les uns avec les autres de manière quelconque dans le cas de diverses combinaisons de chacun des radicaux susmentionnés,
les R"' ne portent pas de substituants ou portent des substituants aliphatiques et/ou cycloaliphatiques et/ou aromatiques contenant au moins un atome de carbone, qui peuvent également porter des hétéroatomes, au moins en une position ortho par rapport à l'atome de carbone aromatique qui porte le groupe carbodiimide,
R⁵ = alkyle en C₁-C₁₈, cycloalkyle en C₅-C₁₈, aryle, aralkyle en C₇-C₁₈, -R'"-NH-COS-R⁷, R'"-COOR⁷, -R'''-OR⁷, -R'''-N(R⁷)₂, -R'''-SR⁷, -R'''-OH, R'''-NH₂, -R'''-NHR⁷, R"'-époxy, -R"'-NCO, -R"'-NHCONHR⁷, -R"'-NHCONR⁷R⁸ ou -R"'-NHCOOR⁹, et
R⁶ = -N=C=N-aryle, -N=C=N-alkyle, -N=C=N-cycloalkyle, - N=C=N-aralkyle, -NCO, -NHCONHR⁷, -NHCONHR⁷R⁸, NHCOOR⁹, - NHCOS-R⁷, -COOR⁷, -OR⁷, -époxy, -N(R⁷)₂, -SR⁷, -OH, -NH₂, -NHR⁷,
R⁷ et R⁸ étant identiques ou différents indépendamment l'un de l'autre dans R⁵ et R⁶, et représentant un radical alkyle en C₁-C₂₀, cycloalkyle en C₃-C₂₀, aralkyle en C₇-C₁₈, des oligo-/polyéthylène et/ou propylène glycols, et R⁹ ayant une des significations de R⁷ ou signifiant un radical polyester ou polyamide, et, dans le cas de carbodiimides aromatiques oligomères, m correspondant à un nombre entier de 1 à 5 et, dans le cas de carbodiimides aromatiques polymères, m correspondant à un nombre entier > 5.

7. Matières synthétiques bio selon une ou plusieurs des revendications 1 à 6, **caractérisées en ce que** le carbodiimide aromatique polymère ou oligomère consiste en des composés de formule (III), dans laquelle R"' correspond à un 2,4,6-triisopropylphényle 1,3-substitué et/ou à un dérivé de tétraméthylxylylène et/ou à un tolylène 2,4-substitué et/ou à un tolylène 2,6-substitué et/ou à des mélanges de tolylène 2,4- ou 2,6-substitué.

8. Procédé de fabrication des matières synthétiques bio selon une ou plusieurs des revendications 1 à 7, **caractérisé en ce qu'**au moins une résine de polyester est mélangée avec au moins un carbodiimide monomère aromatique et au moins un carbodiimide oligomère aromatique et/ou polymère aromatique dans un appareil de mélange, le rapport entre le carbodiimide monomère aromatique et le carbodiimide polymère aromatique et/ou oligomère aromatique étant > 1:1.

9. Utilisation des matières synthétiques bio selon une ou plusieurs des revendications 1 à 7 dans des applications à longue durée de vie dans le domaine électronique, automobile, dans les transports, dans la construction, dans le domaine ménager, en tant que fourniture de bureau, ou dans des applications en conditions rudes.
